# EUROPÄISCHE PATENTSCHRIFT

(11) **EP 0 998 658 B1**
(45) Veröffentlichungstag und Bekanntmachung des Hinweises auf die Patenterteilung: **05.12.2001**
(21) Anmeldenummer: 98941304.2
(22) Anmeldetag: 08.07.1998
(51) Int. Cl.: G01D 5/14

(54) **MAGNETISCHER POSITIONSSENSOR**
MAGNETIC POSITION SENSOR
CAPTEUR DE POSITION MAGNETIQUE

(30) Priorität: 23.07.1997 DE 19731554; 06.06.1998 DE 19825433
(43) Veröffentlichungstag der Anmeldung: 10.05.2000
(73) Patentinhaber: Mannesmann VDO Aktiengesellschaft, 60388 Frankfurt am Main (DE)
(72) Erfinder: HANNEWALD, Thomas, D-64347 Griesheim (DE); SAUERSCHELL, Wolfgang, D-61440 Oberursel (DE); WEHNER, Andreas, D-61389 Schmitten (DE); WIESE, Peter, D-61462 Königstein (DE)
(74) Vertreter: Rassler, Andrea, Dipl.-Phys.
(86) Internationale Anmeldenummer: EP9804236
(87) Internationale Veröffentlichungsnummer: WO9905475

(56) Entgegenhaltungen:
- EP-A- 0 620 647
- WO-A-82/02447
- DE-A- 19 719 019
- FR-A- 2 280 906
- GB-A- 2 272 060
- US-A- 4 914 389

## Beschreibung

Die Erfindung betrifft einen magnetischen Positionssensor, bei welchem in einem Magnetfeld mindestens zwei Statorelemente angeordnet sind und im Meßluftspalt zwischen den Statorelementen sich eine Magnetfeld-Sonde befindet, wobei ein einem beweglichen Objekt folgendes Mittel parallel zu der von den Statorelementen aufgespannten Ebene angeordnet ist.

Es sind Hall-Winkelsensoren bekannt, die winkelproportionale Signale abgeben. Die Erfassung einer Drehbewegung erfolgt dabei über eine Hall-Sonde, die sich in einem Luftspalt befindet, der zwischen zwei Statorhälften ausgebildet wird.

Ein Rotor ist fest auf einer Welle angeordnet, welche wiederum mit dem Objekt verbunden ist, dessen Positionsänderung detektiert werden soll.

Die Statorelemente sind am Sensorgehäuse befestigt. Der Hall-Sensor ist im Meßluftspalt zwischen den Statorelementen radial zur Drehrichtung der Welle angeordnet, so daß seine elektrischen Anschlüsse über die Statorelemente hinausragen und zur Herstellung der elektrischen Verbindung mit einer Auswerteschaltung auf einer Leiterplatte verbunden sind.

Nachteilig dabei ist die aufwendige Montage des Sensors, da in getrennten Verfahrensschritten einmal die Montage der Statorelemente und andererseits die elektrische Verbindung der Hall-Sonde mit der Leiterplatte erfolgen muß.

Ein gattungsgemäßer magnetischer Positionssensor ist aus der GB 2 272 060 A bekannt, bei welchem in einem Magnetfeld mindestens zwei Statorelemente angeordnet sind, wobei der Meßluftspalt von den Statorelementen begrenzt wird und eine Magnetfeldsonde sich in diesem Meßluftspalt befindet. Dabei ist die Magnetfeldsonde direkt und das Statorelement über einen Hilfsträger auf einem gemeinsamen Trägerelement angeordnet. Auch bei dieser Anordnung ist eine aufwendige Montage insbesondere der Statorelemente über den Hilfsträger auf der Leiterplatte notwendig.

Der Erfindung liegt somit die Aufgabe zugrunde, einen magnetischen Positionssensor anzugeben, welcher einfach und kostengünstig herstellbar ist.

Erfindungsgemäß wird die Aufgabe durch die Merkmale des Kennzeichens des Patentanspruchs 1 gelöst.

Insbesondere dann, wenn das Trägerelement parallel zur radialen Ausdehnung des Statorelementes ausgerichtet ist, läßt sich die Bauform des magnetischen Positionssensor verkleinern und die Montage von Statorelementen und Magnetfeldsonde kann gemeinsam mit anderen elektronischen Bauelementen auf dem Trägerelement in einem einzigen Verfahrensschritt erfolgen.

Das Ende dieses abgewinkelten Bereiches des Statorelementes kann bei der Montage direkt auf die Kupferkaschierung der Leiterplatte aufgesetzt und stumpf, z. B. durch Reflowlöten befestigt werden.

In einer weiteren Ausgestaltung schließt sich an den ersten abgewinkelten Bereich des Statorelementes ein zweiter abgewinkelter Bereich an, der parallel zum Trägerelement ausgebildet und mit diesem verbunden ist. Bei dieser Variante ist der zweite abgewinkelte Bereich flächig mit der Kupferkaschierung des Trägerelementes verbunden, was eine bessere Haftfestigkeit des Stators auf dem Trägerelement ermöglicht. Auch dieser Teil ist einfach mittels Oberflächenlötung auf dem Trägerelement zu befestigen.

In einer besonders einfachen Ausführung ist das Statorelement als Stanz-Biegeteil ausgebildet, das direkt auf dem Trägerelement aufliegt. Das so ausgebildete Statorelement weist mindestens eine Abkröpfung auf, die durch eine Öffnung des Trägerelementes in dieses eingeführt und dort auf der Gegenseite fixiert wird.

Die Herstellung als Stanz-Biegeteil ermöglicht einen Verzicht auf Nieten und Scheiben, so daß mittels Lötung der Montageprozeß automatisiert werden kann. Die Möglichkeiten der Ausgestaltung der Statorelemente können auch kombiniert werden.

In einer Ausgestaltung ist die Magnetfeldsonde radial versetzt zu einer Welle im Meßluftspalt angeordnet, wobei die Welle fest mit dem Rotor verbunden ist, der in axialer Richtung zu den Statorelementen angeordnet ist.

Der Rotor ist zweiteilig ausgebildet, wobei jedes weichmagnetische Rotorelement mindestens ein Kreissegment aufweist und die Rotorelemente starr gegeneinander verdreht miteinander verbunden sind, so daß das Kreissegment des ersten Rotorelementes einer Segmentlücke des zweiten Rotorelementes gegenübersteht, wobei die Statorelemente zwischen den Rotorelementen angeordnet sind und ein das Magnetfeld in axialer Richtung erzeugender Magnet sowohl zwischen den Rotorelementen als auch den Statorelementen angeordnet ist.

Der Vorteil der Erfindung besteht darin, daß durch die starre zweiteilige Rotorgestaltung die Auswirkungen des Axialspiels auf das Sensorsignal unterbunden werden, da die beiden zwischen Rotor und Stator auftretenden Luftspalte gleichzeitig in entgegengesetzte Richtung verändert werden und somit die Summe der Luftspalte immer konstant ist.

Vorteilhafterweise ist die Summe der beiden Luftspalte, die sich in axialer Richtung zwischen den Rotorelementen und je einem Statorelement ausbilden, klein gegenüber der axialen Ausdehnung des Magneten, wodurch der Magnetfluß durch den Stator unterstützt wird.

In einer Ausgestaltung sind die Statorelemente ebenfalls kreissegmentähnlich ausgebildet.

In einer Weiterbildung ist der Außenradius des Kreissegmentes mindestens eines Rotorelementes kleiner als der Außenradius eines Statorelementes. Dies ermöglicht die Anordnung der Magnetfeldsonde parallel zur Drehachse der Welle des Sensors im Luftspalt zwischen den beiden Statorelementen. Der Vorteil dieser Anordnung besteht darin, daß der Magnet nun optimal dimensioniert werden kann, da der axiale Abstand der beiden Rotorteile frei variiert werden kann.

Da die Winkelabhängigkeit der Flußführung nicht über die Kontur oder Magnetisierung des Magneten erreicht wird, sondern durch die unsymmetrische Gestaltung des Rotors, sind die Anforderungen an den Magneten minimal.

Der Magnet muß lediglich ein axial gerichtetes Feld erzeugen. Dieses kann wahlweise von einem drehbar gelagerten Dauermagneten oder einem bezogen auf den Stator ortsfesten Magneten erzeugt werden, der in diesem Fall sowohl als Dauer- oder auch als Elektromagnet ausgeführt sein kann.

In einer Weiterbildung ist der Magnet als dauermagnetischer Ringmagnet ausgebildet.

Vorteilhafterweise sind die Statorsegmente dabei immer koaxial um die Drehachse der Rotorwelle angeordnet.

Die Erfindung läßt zahlreiche Ausführungsbeispiele zu. Eines davon soll anhand der in der Zeichnung dargestellten Figuren näher erläutert werden.

Es zeigen:
- Figur 1: Pedaleinheit eines Kraftfahrzeuges,
- Figur 2:: Schnitt durch einen magnetischen Positionssensor, der an der Pedaleinheit des Kraftfahrzeuges angeordnet ist,
- Figur 3:: Prinzipdarstellung des magnetischen Positionssensors,
- Figur 4.: Anordnung der Statorelemente des magnetischen Positionssensors auf einer Leiterplatine,
- Figur 5:: Statorelement,
- Figur 6:: Befestigungsmöglichkeiten der Statorelemente auf der Leiterplatine.

In den Figuren sind gleiche Merkmale mit gleichem Bezugszeichen gekennzeichnet.

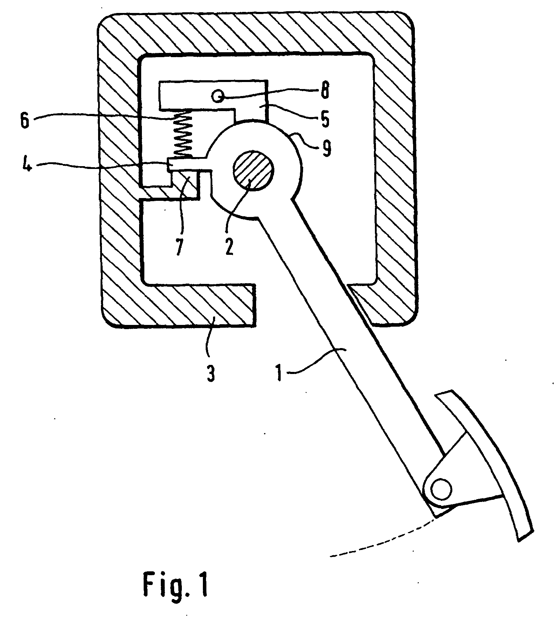

Gemäß Figur 1 ist ein Fahrpedal 1, z. B. ein Gaspedal eines Kraftfahrzeuges, drehfest mit der Welle 2 verbunden, die ihrerseits drehbar im Lagerbock 3 gelagert ist. Die Rückstellfeder 6 stützt sich einerseits an einem mit dem Fahrpedal 1 einstückig ausgebildeten Ansatz 4 und andererseits an einen um eine Welle 8 drehbaren Hebel 5 ab, der mit seinem anderen Ende reibend gegen eine Drehfläche 9 des Fahrpedals 1 anliegt. Dadurch wird ein an der Schwenkbewegung des Fahrpedals 1 in beiden Richtungen entgegenwirkender Reibwiderstand (Hysterese) gebildet, wodurch unbeabsichtigte Schwingungen des Fahrpedals 1 weitgehend unterdrückt werden.

Die Wirkung der Rückstellfeder 6 ist durch einen inneren Anschlag 7 begrenzt, an dem der Ansatz 4 zur Anlage kommt, wenn das Fahrpedal 1 nicht bedient wird.

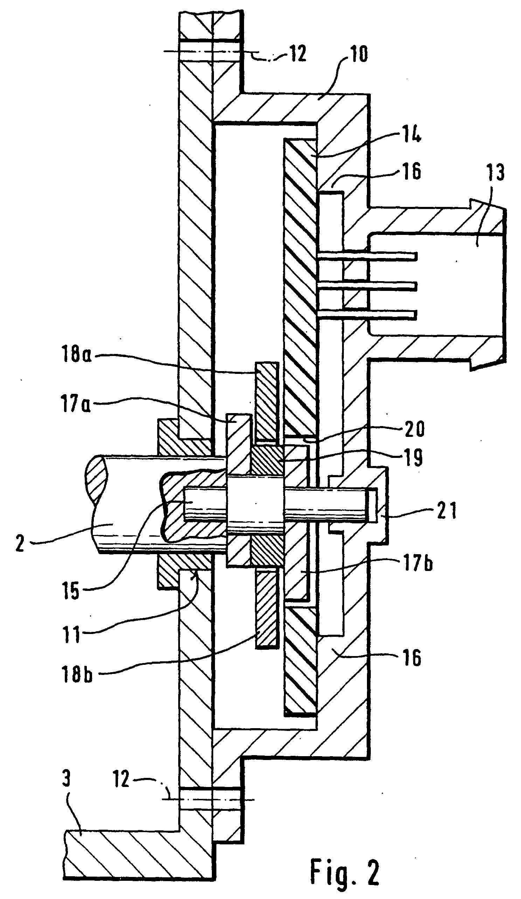

In Figur 2 ist die Anordnung eines Winkelsensors am Lagerbock 3 des Fahrpedals 1 dargestellt. Über eine nur angedeutete Schraubverbindung 12 ist das Gehäuse 10 des Winkelsensors mit dem Lagerbock 3 verbunden.

Das Gehäuse 10 weist einen Steckverbinder 13 auf, welche eine elektrische Verbindung zur Leiterplatte 14 ermöglicht, die innerhalb des Gehäuses 10 auf den Vorsprüngen 16 des Gehäuses 10 angeordnet ist.

Die durch eine Öffnung 11 aus dem Lagerbock 3 herausgeführte Welle 2 nimmt eine unmagnetische Welle 15 auf, die gestuft ausgebildet ist. Auf dieser beispielsweise als Kunststoffwelle ausgebildeten Welle 15 sind 2 Rotorelemente 17a und 17b drehfest so angeordnet, daß sie einen Ringmagneten 19 und zwei Statorelemente 18a und 18b axial einschließen. Die Statorelemente 18a und 18b sind auf der Leiterplatte 14 angeordnet. Durch eine Öffnung 20 der Leiterplatte 14 ist das Rotorelement 17b beweglich geführt. Die der Welle 2 abgewandte Seite der Kunststoffwelle 15 ist beweglich in einer Aufnahme 21 des Gehäuses 10 geführt.

Das Gehäuse 10 ist mit der Steckeraufnahme 13 und der Aufnahme 21 einstückig ausgebildet.

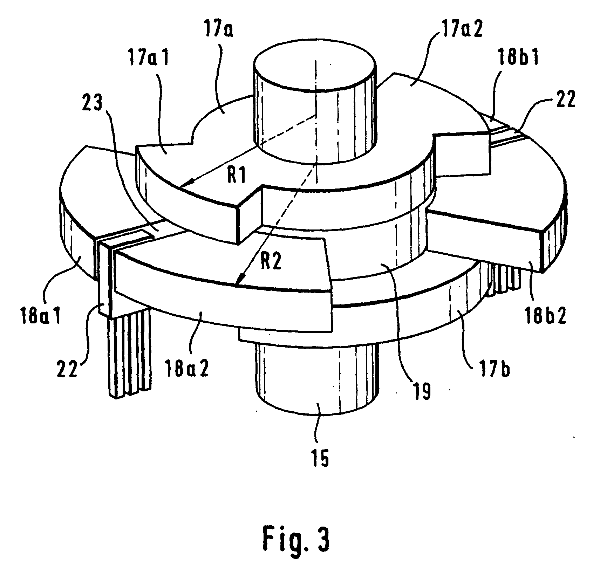

Das Sensorprinzip ist in Figur 3 dargestellt und soll im weiteren erläutert werden.

Der Magnet 19 befindet sich zwischen Rotorelementen 17a, 17b aus weichmagnetischem Material, die um 180° gegeneinander verdreht sind. Über die Kunststoffwelle 15 sind die Rotorelemente 17a und 17b starr miteinander gekoppelt.

Jedes Rotorelement weist im einfachsten Fall zwei Segmente 17a1, 17a2, bzw. 17b1 und 17b2 auf, die sich gegenüberliegend angeordnet sind. Das erste Rotorelement 17a weist um 180° gegeneinander verschobene Segmente 17a1, 17a2 auf, das zweite Rotorelement 17b besitzt ebenfalls zwei Segmente 17b1, 17b2. Die Rotorelemente sind in Richtung des Drehzentrums magnetisch gekoppelt. Die beiden Rotorelemente 17a, 17b sind so gegeneinander versetzt, daß dem Segment 17a1 des Rotorelementes 17a eine Segmentlücke des Rotorelementes 17b gegenüberliegt. Das gleiche gilt für die Segmente 17b1, 17b2 des zweiten Rotorelementes 17b, welche immer einer Segmentlücke des ersten Rotorelementes 17a gegenüberliegen. Als Segmentlücke sind dabei jeweils der Abstand zwischen zwei Segmenten 17a1, 17a2 bzw. 17b1, 17b2 eines Rotorelementes 17a bzw. 17b bezeichnet.

Es ist aber auch vorstellbar, daß die Rotorelemente 17a, 17b N Segmente ausweisen. Dann werden die Rotorelemente um 180°/N gegeneinander versetzt angeordnet. Wie bereits erläutert, beträgt die Breite jedes Flügels dabei entsprechend 180°/N. Dadurch wir die Periodizität des Signals gegenüber der halbkreisförmigen Variante um 1/N reduziert.

Das in Figur 3 dargestellte System weist eine Statoranordnung auf, welche aus zwei unmittelbar nebeneinander angeordneten Segmenten 18a1, 18a2 besteht. Die Statorsegmente 18a1 und 18a2 sind zwischen den Rotorelementen 17a, 17b angeordnet und bilden gegeneinander einen Luftspalt 23, in welchem die Hall-Sonde 22 axial zur Welle 15 angeordnet ist.

Figur 3 zeigt ein redundantes System, bei welchen neben den schon bereits erläuterten Statorsegmenten 18a1 und 18a2 noch ein zweites Paar von Statorsegmenten 18b1, 18b2 ausgebildet ist, welches dem ersten Paar von Statorsegmenten 18a1, 18a2 um 180° gedreht angeordnet ist. Auch die Statorsegmente 18b1 und 18b2 bilden einen Meßluftspalt 23, in welchem eine zweite Magnetfeldsonde 22 angeordnet ist.

Bei dieser Ausführung sind die Statorsegmente 18a1, 18a2, 18b1 und 18b2 mit einem größeren Außenradius R2 versehen, als die Rotorsegmente 17a1, 17a2 bzw. 17b1, 17b2. Die Rotorsegmente weisen einen Außenradius R1 auf, der so dimensioniert ist, daß die Hallelemente 22 vollständig in dem Meßluftspalt eingeführt werden können, ohne daß sie von dem Rotorsegment 17a1, 17a2; bzw. 17b1, 17b2 überlagert werden.

Die axial zur Drehrichtung des Sensors im Meßluftspalt 23 angeordneten Hall-Sonden 22 können nun auf ein und derselben Leiterplatte 14 angeordnet werden.

Der Magnet 19 kann optimal dimensioniert werden, da der axiale Abstand der beiden Rotorelemente 17a, 17b frei wählbar ist.

Eine Montagevereinfachung des Gesamtsensors wird erreicht, wenn das Kreissegment des ersten Rotorelementes einen geringeren Winkel als die Segmentlücke des zweiten Rotorelementes aufweist.

In Bild 3 ist ein Beispiel dargestellt, bei dem eine Segmentierung in 57° vorgenommen wurde und ein redundantes Signal erzeugt wird.

Zwischen diesen beiden Statorpaaren 18a1, 18a2; 18b1, 18b2 ergeben sich offene Bereiche von hier beispielsweise 66°.

Das Rotorelement 17a weist zwei Segmente 17a1, 17a2 von einfacher Statorbreite (57°) auf. Das Rotorelement 17b ist komplementär aufgebaut, d. h. die Lücken haben eine Ausdehnung, welche der Breite der Kreissegmente 17a1, 17a2 des Rotorelementes 17a entsprechen.

Bringt man das Rotorpaket 17a, 17b in eine geeignete Stellung, die ±90° zur dargestellten Stellung entspricht, so kann dieses als ganzes axial gefügt bzw. zerlegt werden.

Hierdurch läßt sich eine wesentliche Montagevereinfachung erreichen, da nun die Statorseite (Leiterplatte 14) mit Statoren und Elektronik ebenso wie die Rotorseite (Rotorelemente 17a, 17b, Magnet 19 und Welle 15 ) als vormontierte Einheiten gehandhabt werden können.

Beispielsweise kann die Rotorseite auf der unmagnetischen Welle 15 vormontiert werden, welche dann auf die Welle 2 aufgepreßt wird. Durch den Kunststoffkörper läßt sich eine magnetische Entkopplung der Welle 5 herstellen, welche dann aus weichmagnetischem Werkstoff bestehen kann. Auch braucht die Welle dann nicht mehr abgesetzt sein, was ebenfalls eine Vereinfachung bedeutet.

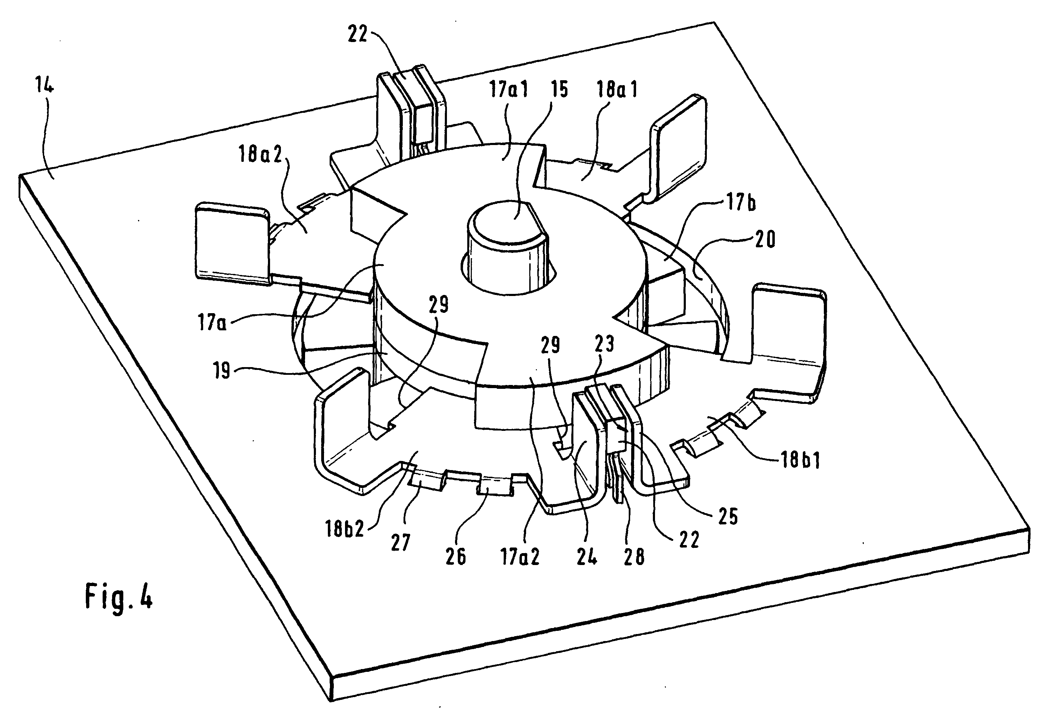

In Figur 4 ist eine Ausführung des soeben beschriebenen Sensors dargestellt, bei welchem die Statorelemente 18a1 und 18a2 bzw. 18b1 und 18b2 direkt auf der Leiterplatte 14 aufliegen.

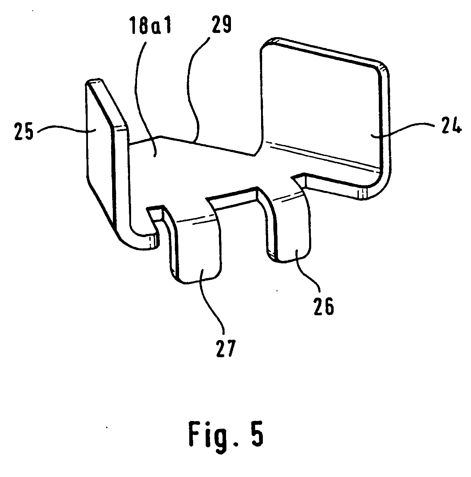

Die Statorelemente 18a1 und 18a2 bzw. 18b1 und 18b2 sind als Stanzbiegeteile ausgebildet. Jedes Statorelement weist an seinen äußeren Segmenträndern 29 jeweils eine Abwinklung 24 bzw. 25 auf (Figur 5). Die Abwinklung 24 des Statorsegmentes 18b2 bildet mit der Abwinklung 25 des Statorsegmentes 18b1 den Meßluftspalt 23, in welchem die Magnetfeldsonde 22 angeordnet ist.

Aufgrund dieser Abwinklungen wird die effektive Meßfläche vergrößert ohne daß die Blechstärke des Stators vergrößert werden muß. Dies führt dazu, daß die Abmessung des Magneten 19 verkleinert werden können und somit der gesamte Sensor kleinere Abmessungen aufweist.

Die elektrischen Anschlüsse 28 des Hall-Sensors 22 greifen in die Leiterplatte 14 ein und werden auf der Unterseite der Leiterplatte 14 schwallgelötet.

Ein Statorsegment ist in Figur 5 noch einmal dargestellt. Am Beispiel des Segmentes 18a1 ist dargestellt, daß am Rand mit dem größten Außenradius R2 zwei Abkröpfungen 26, 27 angeordnet sind, welche in Öffnungen der Leiterplatte 14 eingreifen. Mit Hilfe dieser Abkröpfung 26, 27 werden die Segmente 18a1, 18a2, 18b1, 18b2 auf der Leiterplatte 14 befestigt, in dem sie gleichzeitig mit Hall-Sensoren 22 und weiteren auf der Leiterplatte 14 angeordneten, nicht weiter dargestellten elektrischen Schaltelementen in einem Arbeitsgang schwallgelötet werden.

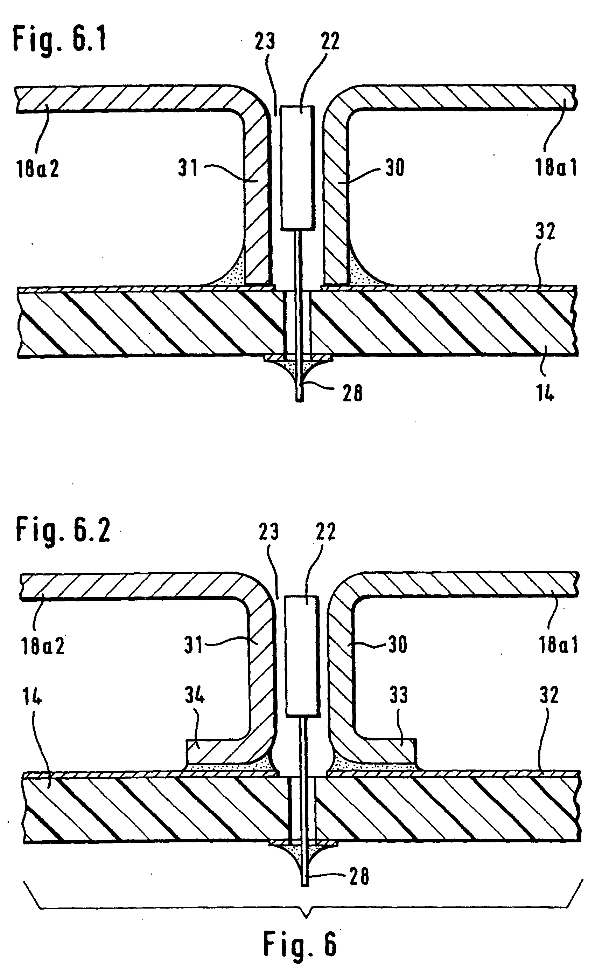

In der Figur 6 sind noch weitere Befestigungsmöglichkeiten der Statorsegmente dargestellt. Figur 6.1 zeigt ein Statorelement 18a1, welches einen vorgegebenen Abstand zur Leiterplatte 14 aufweist. Ein rechtwinklig abgewinkelter Bereich 30 des Statorsegmentes 18a1 bzw. 31 des Statorsegmentes 18a2 ist stumpf auf die Kupferkaschierung 32 der Leiterplatte 14 aufgesetzt und durch Reflowlötung mit dieser verbunden. Der abgewinkelte Bereich 30, 31 dient dabei gleichzeitig als Abstandshalter des Statorsegmentes 18a1 zur Leiterplatte 14.

Bei der in Figur 6.2 dargestellten Variante schließt sich an die erste 90°-Abwinklung 30 des Statorelementes 18a1 ein zweiter um 90° abgewinkelter Bereich 33 an, der parallel zur Leiterplatte ausgebildet ist und flächig auf dieser aufliegt und verlötet ist. Das Statorelement 18a1 bildet mit den beiden abgewinkelten Bereichen 30 und 33 ein um 90° gedrehtes U.

Sowohl in der Variante gemäß Figur 6.1 als auch in der Ausführung nach Figur 6.2 bilden die ersten Abwinklungen 30 jedes Statorsegmentes mit der ersten Abwinklung 31 des parallel dazu angrenzenden Statorsegmentes den Meßluftspalt 23, in welchem die Hall-Sonde 22 angeordnet ist.

## Patentansprüche

1. Magnetischer Positionssensor, bei welchem in einem Magnetfeld mindestens zwei Statorelemente angeordnet sind und im Meßluftspalt zwischen den Statorelementen sich eine Magnetfeld-Sonde befindet, wobei ein einem beweglichen Objekt folgendes Mittel parallel zu der von den Statorelementen aufgespannten Ebene angeordnet ist und mindestens ein Statorelement und die Magnetfeld-Sonde auf einem gemeinsamen Trägerelement angeordnet sind, **dadurch gekennzeichnet, daß** das Trägerelement (14) parallel zur radialen Ausdehnung der Statorelemente (18 a, 18 b) ausgerichtet ist und das Statorelement (18 a, 18 b) einen in Richtung des Trägerelementes (14) abgewinkelten Bereich (30, 31) zur Befestigung des Statorelementes (18 a, 18 b) am Trägerelement (14) aufweist.

2. Magnetischer Positionssensor nach Anspruch 1, **dadurch gekennzeichnet, daß** der abgewinkelte Bereich (30, 31) stumpf auf dem Trägerelement (14) aufgelötet ist.

3. Magnetischer Positionssensor nach Anspruch 2, **dadurch gekennzeichnet, daß** sich an den ersten abgewinkelten Bereich (30, 31) des Statorelementes (18a, 18b) ein zweiter abgewinkelter Bereich (33, 34) anschließt, der parallel zum Trägerelement (14) ausgebildet und mit diesem verbunden ist.

4. Magnetischer Positionssensor nach Anspruch 1, **dadurch gekennzeichnet, daß** mindestens eine Abkröpfung (26, 27) des Statorelementes (18a, 18b) in Öffnungen des Trägerelementes (14) eingeführt und dort verlötet ist.

5. Magnetischer Positionssensor nach einem der vorhergehenden Ansprüche, **dadurch gekennzeichnet, daß** das Statorelement (18a, 18b) ein Stanz-Biegeteil ist, welches direkt auf dem Trägerelement (14) aufliegt.

6. Magnetischer Positionssensor nach Anspruch 1 oder 5, **dadurch gekennzeichnet, daß** die Statorelemente (18a, 18b) mindestens eine Abwinklung (24, 25) aufweisen, wobei zwischen den Abwinklungen (24, 25) zweier nebeneinander angeordneter Statorelemente (18a, 18b) der die Magnetfeldsonde (22) aufnehmende Meßluftspalt (23) ausgebildet ist.

7. Magnetischer Positionssensor nach Anspruch 1 und 6, **dadurch gekennzeichnet, daß** die Magnetfeldsonde (22) parallel zu einer Welle (15) im Meßluftspalt (23) angeordnet ist, wobei die Welle (15) mit einem Rotor (17a, 17b) verbunden ist, der die Statorelemente (18a, 18b) axial einschließt.

8. Magnetischer Positionssensor nach Anspruch 7, **dadurch gekennzeichnet, daß** der Rotor zweiteilig ausgebildet ist, wobei jedes weichmagnetische Rotorelement (17a, 17b) mindestens ein Kreissegment (17a1, 17a2, 17b1, 17b2) aufweist, und die Rotorelemente (17a, 17b) starr gegeneinander verdreht miteinander verbunden sind, so daß das Kreissegment (17a1, 17a2) des ersten Rotorelementes (17a) einer Segmentlücke des zweiten Rotorelementes (17b) gegenübersteht, wobei die Statorelemente (18a, 18b) zwischen den Rotorelementen (17a, 17b) angeordnet sind und ein das Magnetfeld in axialer Richtung erzeugender Magnet (19) sowohl zwischen Rotorelementen (17a, 17b) als auch den Statorelementen (18a, 18b) angeordnet ist.

9. Magnetischer Positionssensor nach Anspruch 8, **dadurch gekennzeichnet, daß** die Summe der beiden Luftspalte, die sich in axialer Richtung zwischen den Rotorelementen (17a, 17b) und je einem Statorelement (18a, 18b) ausbilden; klein gegenüber der axialen Ausdehnung des Magneten (19) ist.

10. Magnetischer Positionssensor nach Anspruch 8, **dadurch gekennzeichnet, daß** die Statorelemente (18a, 18b) kreissegmentähnlich ausgebildet sind.

11. Magnetischer Positionssensor nach Anspruch 8 und 10, **dadurch gekennzeichnet, daß** der Außenradius (R1) des Kreissegmentes (17a1, 17a2, 17b1, 17b2) mindestens eines Rotorelementes (17a, 17b) kleiner ist als der Außenradius (R2) eines Statorelementes (18a, 18b).

12. Magnetischer Positionssensor nach einem der Ansprüche 8 bis 11, **dadurch gekennzeichnet, daß** der Magnet (19) als dauermagnetischer Ringmagnet ausgebildet ist.

13. Magnetischer Positionssensor nach Anspruch 12, **dadurch gekennzeichnet, daß** der Ringmagnet (19) an der Rotorwelle (15) befestigt ist.

14. Magnetischer Positionssensor nach einem der Ansprüche 8 bis 11, **dadurch gekennzeichnet, daß** die Statorelemente (18a, 18b) koaxial um die Drehachse der Rotorwelle (15) herum angeordnet sind.

15. Magnetischer Positionssensor nach Anspruch 7, **dadurch gekennzeichnet, daß** der aus den Rotorelementen (17a, 17b) und der Rotorwelle (15) bestehende Rotor als ganzes axial fügbar bzw. zerlegbar ist.

## Claims

1. Magnetic position sensor, in which at least two stator elements are arranged in a magnetic field and there is a magnetic field probe in the measuring air gap between the stator elements, a means following a movable object being arranged parallel to the plane defined by the stator elements and at least one stator element and the magnetic field probe being arranged on a common supporting element, **characterized in that** the supporting element (14) is aligned parallel to the radial extent of the stator elements (18a, 18b) and the stator element (18a, 18b) has a region (30, 31) angled away in the direction of the supporting element (14) for fastening the stator element (18a, 18b) on the supporting element (14).

2. Magnetic position sensor according to Claim 1, **characterized in that** the angled-away region (30, 31) is soldered flush on the supporting element (14).

3. Magnetic position sensor according to Claim 2, **characterized in that** the first angled-away region (30, 31) of the stator element (18a, 18b) is adjoined by a second angled-away region (33, 34), which is formed parallel to the supporting element (14) and is connected to it.

4. Magnetic position sensor according to Claim 1, **characterized in that** at least one angled lug (26, 27) of the stator element (18a, 18b) is inserted into openings of the supporting element (14) and soldered there.

5. Magnetic position sensor according to one of the preceding claims, **characterized in that** the stator element (18a, 18b) is a punched-bent part which rests directly on the supporting element (14).

6. Magnetic position sensor according to Claim 1 or 5, **characterized in that** the stator elements (18a, 18b) have at least one angled-away portion (24,25), the measuring air gap (23) receiving the magnetic field probe (22) being formed between the angled-away portions (24, 25) of two stator elements (18a, 18b) arranged next to each other.

7. Magnetic position sensor according to Claims 1 and 6, **characterized in that** the magnetic field probe (22) is arranged in the measuring air gap (23) parallel to a shaft (15), the shaft (15) being connected to a rotor (17a, 17b) which axially encloses the stator elements (18a, 18b).

8. Magnetic position sensor according to Claim 7, **characterized in that** the rotor is of a two-part form, each soft-magnetic rotor element (17a, 17b) having at least one segment of a circle (17a1, 17a2, 17b1, 17b2), and the rotor elements (17a, 17b) being rigidly connected to each other in such a way that they cannot turn with respect to each other, so that the segment of a circle (17a1, 17a2) of the first rotor element (17a) is opposite a segment gap of the second rotor element (17b), the stator elements (18a, 18b) being arranged between the rotor elements (17a, 17b), and a magnet (19) generating the magnetic field in the axial direction being arranged both between the rotor elements (17a, 17b) and the stator elements (18a, 18b).

9. Magnetic position sensor according to Claim 8, **characterized in that** the sum of the two air gaps which are formed in the axial direction between the rotor elements (17a, 17b) and in each case a stator element (18a, 18b) is small in comparison with the axial extent of the magnet (19).

10. Magnetic position sensor according to Claim 8, **characterized in that** the stator elements (18a, 18b) are formed like segments of a circle.

11. Magnetic position sensor according to Claims 8 and 10, **characterized in that** the outer radius (R1) of the segment of a circle (17a1, 17a2, 17b1, 17b2) of at least one rotor element (17a, 17b) is smaller than the outer radius (R2) of a stator element (18a, 18b).

12. Magnetic position sensor according to one of Claims 8 to 11, **characterized in that** the magnet (19) is formed as a permanently magnetic ring magnet.

13. Magnetic position sensor according to Claim 12, **characterized in that** the ring magnet (19) is fastened on the rotor shaft (15).

14. Magnetic position sensor according to one of Claims 8 to 11, **characterized in that** the stator elements (18a, 18b) are arranged coaxially around the axis of rotation of the rotor shaft (15).

15. Magnetic position sensor according to Claim 7, **characterized in that** the rotor comprising the rotor elements (17a, 17b) and the rotor shaft (15) as a whole can be axially fitted together or dismantled.

## Revendications

1. Détecteur magnétique de position, dans lequel au moins deux éléments de stator sont disposés dans un champ magnétique et une sonde de champ magnétique se trouve dans un entrefer de mesure situé entre les éléments de stator, un moyen suivant un objet mobile étant disposé parallèlement au plan sous-tendu par les éléments de stator et au moins un élément de stator et la sonde de champ magnétique étant disposés sur un élément de support commun, **caractérisé en ce que** l'élément de support (14) est orienté parallèlement à l'extension radiale des éléments de stator (18a, 18b), et l'élément de stator (18a, 18b) présente une zone (30, 31) repliée en direction de l'élément de support (14) pour la fixation de l'élément de stator (18a, 18b) sur l'élément de support (14).

2. Détecteur magnétique de position selon la revendication 1, **caractérisé en ce que** la zone repliée (30, 31) est soudée bord à bord sur l'élément de support (14).

3. Détecteur magnétique de position selon la revendication 2, **caractérisé en ce qu'**une deuxième zone repliée (33, 34) qui est parallèle à l'élément de support (14) et est reliée à ce dernier se raccorde à la première zone repliée (30, 31) de l'élément de stator (18a, 18b).

4. Détecteur magnétique de position selon la revendication 1, **caractérisé en ce qu'**au moins un coude (26, 27) de l'élément de stator (18a, 18b) est inséré dans des ouvertures de l'élément de support (14), où il est soudé.

5. Détecteur magnétique de position selon l'une des revendications précédentes, **caractérisé en ce que** l'élément de stator (18a, 18b) est une pièce estampée coudée qui repose directement sur l'élément de support (14).

6. Détecteur magnétique de position selon la revendication 1 ou 5, **caractérisé en ce que** les éléments de stator (18a, 18b) présentent au moins un rabat (24, 25), l'entrefer de mesure (23) recevant la sonde (22) de champ magnétique étant réalisé entre les rabats (24, 25) de deux éléments de stator (18a, 18b) disposés l'un à côté de l'autre.

7. Détecteur magnétique de position selon les revendications 1 et 6, **caractérisé en ce que** la sonde (22) de champ magnétique est disposée parallèlement à un arbre (15) situé dans l'entrefer de mesure (23), l'arbre (15) étant relié à un rotor (17a, 17b) qui entoure axialement les éléments de stator (18a, 18b).

8. Détecteur magnétique de position selon la revendication 7, **caractérisé en ce que** le rotor est configuré en deux parties, chaque élément magnétique doux de rotor (17a, 17b) présentant au moins un segment circulaire (17a1, 17a2, 17b1, 17b2), et les éléments de rotor (17a, 17b) sont reliés l'un à l'autre dans un décalage angulaire mutuel et fixé de telle sorte que le segment de cercle (17a1, 17a2) du premier élément de rotor (17a) est situé face à un trou en forme de segment du deuxième élément de rotor (17b), les éléments de stator (18a, 18b) étant situés entre les éléments de rotor (17a, 17b), et un aimant (19) créant le champ magnétique dans la direction axiale est disposé à la fois entre les éléments de rotor (17a, 17b) et entre les éléments de stator (18a, 18b).

9. Détecteur magnétique de position selon la revendication 8, **caractérisé en ce que** la somme des deux entrefers qui se forment dans la direction axiale entre les éléments de rotor (17a, 17b) et chaque fois un élément de stator (18a, 18b) est petite par rapport à l'extension axiale de l'aimant (19).

10. Détecteur magnétique de position selon la revendication 8, **caractérisé en ce que** les éléments de stator (18a, 18b) sont configurés en forme de segment de cercle.

11. Détecteur magnétique de position selon les revendications 8 et 10, **caractérisé en ce que** le rayon extérieur (R1) du segment de cercle (17a1, 17a2, 17b1, 17b2) d'au moins un élément de rotor (17a, 17b) est plus petit que le rayon extérieur (R2) d'un élément de stator (18a, 18b).

12. Détecteur magnétique de position selon l'une des revendications 8 à 11, **caractérisé en ce que** l'aimant (19) est configuré en aimant annulaire à magnétisation permanente.

13. Détecteur magnétique de position selon la revendication 12, **caractérisé en ce que** l'aimant annulaire (19) est fixé sur l'arbre (15) du rotor.

14. Détecteur magnétique de position selon l'une des revendications 8 à 11, **caractérisé en ce que** les éléments de stator (18a, 18b) sont disposés coaxialement autour de l'axe de rotation de l'arbre (15) du rotor.

15. Détecteur magnétique de position selon la revendication 7, **caractérisé en ce que** le rotor constitué des éléments de rotor (17a, 17b) et de l'arbre de rotor (15) peut être inséré ou enlevé axialement en une seule pièce.
